(19) Europäisches Patentamt
European Patent Office
Office européen des brevets

(11) **EP 3 816 104 A1**

(12) **EUROPEAN PATENT APPLICATION**
published in accordance with Art. 153(4) EPC

(43) Date of publication:
**05.05.2021 Bulletin 2021/18**

(51) Int Cl.:
***C01B 32/225*** (2017.01)   ***C04B 35/536*** (2006.01)
***F16J 15/3292*** (2016.01)

(21) Application number: **19825431.0**

(22) Date of filing: **26.06.2019**

(86) International application number:
**PCT/RU2019/000465**

(87) International publication number:
**WO 2020/005112 (02.01.2020 Gazette 2020/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2018 RU 2018123804**

(71) Applicant: **Joint Stock Company Scientific and
Production
Association "Unichimtek"
Klimovsk Moskovskaya oblast, g. Podolsk,
142181 (RU)**

(72) Inventors:
• **IVANOV, Andrej Vladimirovich
Novo-moskovsk, 301657 (RU)**

• **MAKSIMOVA, Natalya Vladimirovna
Moscow, 117342 (RU)**
• **SHORNIKOVA, Olga Nikolaevna
Moscow, 129344 (RU)**
• **FILIMONOV, Stanislav Vladimirovich
Nevinomssk, 357106 (RU)**
• **MALAKHO, Artem Petrovich
Moscow, 117324 (RU)**
• **AVDEEV, Viktor Vasilievich
Moscow, 117777 (RU)**

(74) Representative: **Glawe, Delfs, Moll
Partnerschaft mbB von
Patent- und Rechtsanwälten
Postfach 13 03 91
20103 Hamburg (DE)**

(54) **GRAPHITE FOIL, SHEET MATERIAL ON THE BASIS THEREOF, SEAL AND PRODUCTION METHOD**

(57)    The present invention relates to the field of carbon-graphite materials technology; more specifically, to the production of flexible graphite foil from thermally expanded graphite, said foil comprising amorphous carbon in its composition and characterized by improved tightness and low leakage. Graphite foil with improved tightness characteristics is made of a composition comprising compressed TEG and amorphous carbon, wherein said composition is obtained from intercalated graphite with different graphite matrix oxidation degrees, and said composition comprises amorphous carbon in amounts corresponding to maximum $I_D/I_G$ ratio values, depending on the oxidation degree, where $I_G$ and $I_D$ are scattered radiation intensity peaks in the frequency ranges of 1500 - 1630 $cm^{-1}$ and 1305 - 1395 $cm^{-1}$ for graphite and amorphous carbon, respectively, measured by Raman spectroscopy, depending on the oxidation degree of the above-mentioned intercalated graphite, whereby the maximum $I_D/I_G$ ratio for each oxidation degree is greater than, or equal to, 0.05. Additionally, a sheet material based on such foil, a sealing and a method of the claimed foil production are disclosed.

EP 3 816 104 A1

## Description

Field of the invention

The present invention relates to the field of carbon and graphite materials technology; more specifically, to the production of flexible graphite foil from thermally expanded graphite, said foil comprising amorphous carbon in its composition and characterized by low leakage.

Background of the invention

Flexible graphite foil (GF) is obtained by compressing thermally expanded graphite (TEG).

In turn, the production of TEG includes the following sequential stages: in the first stage, natural flake graphite is treated with concentrated strong Bronsted acids, in particular, nitric or sulfuric acid, in the presence of an oxidizer ($K_2Cr_2O_7$, $KMnO_4$, $H_2O_2$ etc.); or anodic oxidation of the graphite matrix is performed under electrochemical synthesis. The next stage consists in the hydrolysis of the obtained graphite intercalation compounds to produce intercalated (oxidized) graphite. The last stage of TEG production consists in the thermal expansion of oxidized graphite under a thermal shock at temperatures reaching 1400 °C.

A number of patents mention the improvement of operational characteristics of flexible graphite foil and, in particular, the improvement in hardness, strength, wear properties etc. of graphite sealing products resulting from the incorporation of amorphous carbon.

Patent US4826181 describes a method of obtaining amorphous carbon-containing GF by mixing GF particles with an organic binder (up to 60 mass %), molding the mix into an item with a particular shape, and heating the same item to the temperature of carbonization of the binder with the formation of the amorphous carbon phase. The binder under that technical solution forms a slightly abrasive sealing surface, which cleans and polishes the shaft when the latter moves.

Patent US5225379 proposes the use of thermo-reactive or thermoplastic resins or pitches as a binder, with the binder being either in the liquid or in the solid state. Composites according to that invention are especially beneficial for uses where an elastic material with sufficient hardness is required to withstand creep. They may be used in sealing products at high temperatures and in especially aggressive chemical environments, and also as a slightly abrasive material.

Other patents, e.g. US5228701, EP0334589A2, mention the application of phenolic resins on the flexible graphite foil surface and its subsequent thermal treatment with phenolic resin carbonization and formation of amorphous carbon on the surface and outer layers of the material.

In a sealing ring made of the mentioned graphite foil, the amorphous carbon phase on the surface does not peel off during use and ensures noiseless operation of the device.

Methods of amorphous carbon incorporation involve at least two additional technological operations: introducing an amorphous carbon source (an organic binder, thermo-reactive or thermoplastic resin), and carbonization. The most labor and energy consuming, and requiring complicated equipment support, is the carbonization stage, since it is necessary to ensure a lengthy heating of the material being carbonized at temperatures of from 600 °C to 800 °C in an inert medium (to prevent oxidation of the product with the air oxygen) for several hours. The size of the sample for carbonization is determined by the size of the oven. Thus, the proposed methods, even if they allow the incorporation of amorphous carbon and impart improved properties to graphite foil and GF-based materials, still cannot make this process efficient and inexpensive. Moreover, the incorporation of amorphous carbon by the above-mentioned methods adversely affects foil flexibility, which is required for the production of certain products such as sealing rings, braided packing etc. Therefore, a method is needed for obtaining amorphous carbon-containing graphite foil that would ensure improved operational properties of foil and foil-based materials while retaining flexibility at the same level.

Besides, the examined sources do not provide information on the improvement of foil tightness (both for gas and liquid). Carbonization affects permeability in an uncertain fashion: on the one hand, pores in graphite foil are filled when treated with a binder or resin, on the other hand, carbonization is accompanied by the binder decomposition with the discharge of a gas phase, and if this process is proceeding intensively, the pressure generated inside of the material may result in microfractures and additional pores.

That is why a more promising method of obtaining amorphous carbon-containing GF is the creation of conditions for the amorphous phase formation in the process of GF production without introducing amorphous carbon externally.

The technical problem in all of the above-mentioned cases is the use of expensive and ineffective methods involving the addition of an organic binder to the TEG and its subsequent carbonization, as well as high leakage through the obtained foil.

The objective of the present invention is to obtain foil with improved characteristics as regards tightness, with amorphous carbon in its composition, without the use of the process of carbonization.

Summary of the invention

The above-said objective is achieved by means of graphite foil with improved tightness characteristics produced from a composition comprising compressed thermally expanded graphite and amorphous carbon, where said composition is obtained from intercalated graphite with different degrees of graphite matrix oxidation and comprising amorphous carbon in quantities corresponding to maximum values of the $I_D/I_G$ ratio depending on the oxidation degree, where $I_G$ and $I_D$ are scattered radiation intensity peaks in the frequency ranges of 1500 - 1630 cm$^{-1}$ and 1305-1395 cm$^{-1}$ for graphite and amorphous carbon, respectively, measured by Raman spectroscopy, depending on said intercalated graphite oxidation degree, with the maximum value of the $I_D/I_G$ ratio for each oxidation degree being greater than, or equal to, 0.05.

In particular embodiments of the invention, the obtained foil has a density of 0.5 to 2.1 g/cm$^3$.

Foil may be obtained from a composition additionally comprising a reinforcing filler such as fibers or inorganic particles.

In that case, it may additionally comprise carbon fibers in quantities not exceeding 40 mass % of the entire composition mass.

Foil may be obtained from a composition additionally impregnated with a functional liquid.

Foil may be obtained from a composition additionally comprising anti-corrosion, anti-oxidation or anti-adhesion additives.

The set objective is also achieved by means of a graphite sheet material with improved tightness and low leakage characteristics produced from the above-described graphite foil, which is a laminated material produced from said graphite foil and a metal foil, band or net.

The set objective is also achieved by means of a seal with improved tightness and low leakage characteristics selected from the group comprising a flange gasket and stuffing box packing rings, and comprising said foil.

The set objective is also achieved by a method of production of graphite foil with improved tightness characteristics, in accordance with which it includes obtaining intercalated graphite, heating the intercalated graphite in the thermal shock mode for thermal expansion, and obtaining a semi-product comprising thermally expanded graphite and amorphous carbon, and the subsequent compression of the semi-product to produce graphite foil. The heating in the thermal shock mode is performed under temperatures ensuring maximum values of the $I_D/I_G$ ratio depending on the graphite matrix oxidation degree, where $I_G$ and $I_D$ are scattered radiation intensity peaks in the frequency ranges of 1500 - 1630 cm$^{-1}$ and 1305-1395 cm$^{-1}$ for graphite and amorphous carbon, respectively, measured by Raman spectroscopy, depending on the oxidation degree of the above-mentioned intercalated graphite, with the maximum value of the $I_D/I_G$ ratio for each oxidation degree being greater than, or equal to, 0.05.

In particular embodiments of the invention, the set objective is achieved by a method in which intercalated graphite is obtained in the following sequence: at first, graphite intercalation compounds with different oxidation degrees are obtained by means of a chemical interaction of the source graphite with strong Bronsted acids, and then said graphite intercalation compounds are subjected to hydrolysis to obtain intercalated graphite.

In that case, intercalation compounds are stage I, stage II and stage III graphite bisulfates and/or mixtures thereof.

In another case, graphite intercalation compounds are stage I, stage II and stage III graphite nitrates and/or mixtures thereof.

In particular embodiments of the invention, the set objective is also achieved by ascertaining the graphite matrix oxidation degree from the number of the stage of the obtained graphite intercalation compound.

In that case, before heating in the course of the method, a certain part of the intercalated graphite obtained from graphite intercalation compounds of different stages is used to produce reference samples of foil by means of experimental heating for thermal expansion of intercalated graphite at least at three different temperatures with a subsequent compression, whereafter said foil reference samples are examined by Raman spectroscopy to obtain $I_D/I_G$ ratio dependencies on thermal expansion temperatures, taking into account the stage numbers of graphite intercalation compounds, where $I_G$ and $I_D$ are scattered radiation intensity peaks in the frequency ranges of 1500 - 1630 cm$^{-1}$ and 1305-1395 cm$^{-1}$ for graphite and amorphous carbon, respectively.

Compression in the present foil production method is executed by means of rolling or pressing of the thermally expanded graphite.

Brief description of the drawings

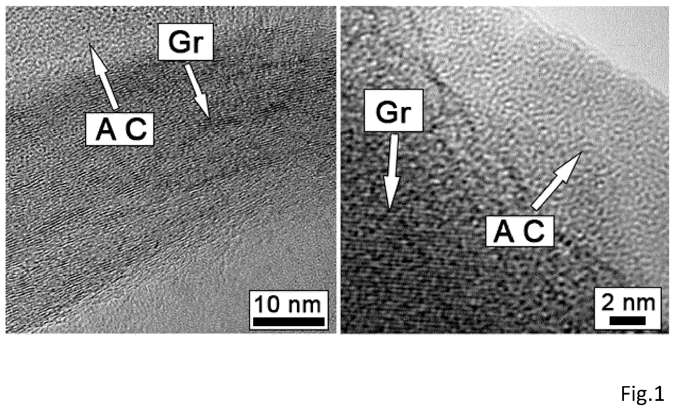

Fig. 1 shows photographs of amorphous carbon-containing TEG microstructure obtained by transmission electronic microscopy (thermal expansion temperature = 600°C based on Stage I graphite bisulfate).

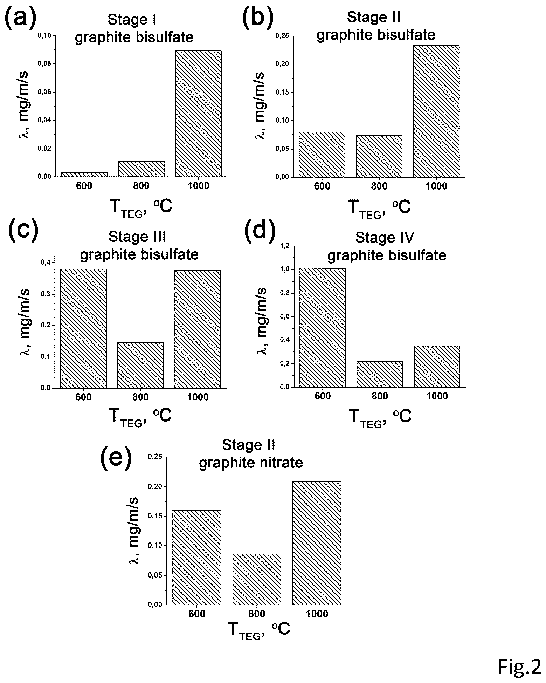

Fig. 2 shows charts illustrating dependency of gaseous nitrogen permeability (gas leak rate) ($\lambda$, mg/m/sec) on the temperature of heating for thermal graphite expansion to obtain graphite foil based on Stages I, II, III or IV graphite bisulfate and Stage II graphite nitrate (see fig. 2a, b, c, d and e, respectively).

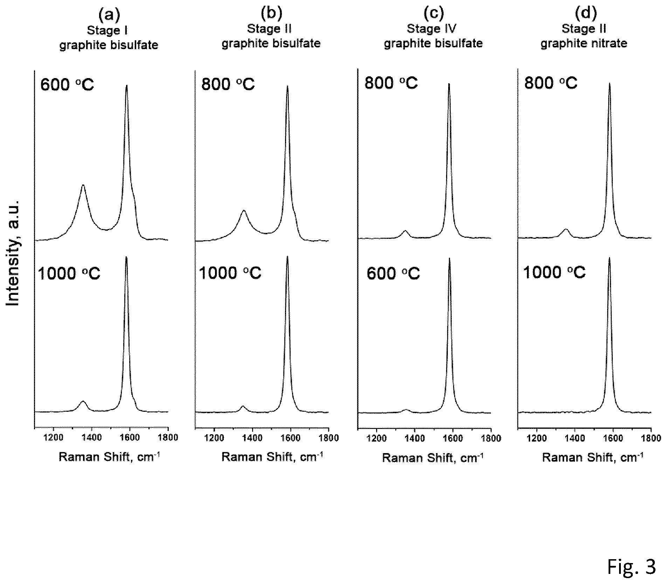

Fig. 3 shows Raman scattering spectra of graphite foil compressed from thermally expanded graphite obtained at temperatures of 600 °C and 1000 °C based on Stage I graphite bisulfate; obtained at temperatures of 800 °C and 1000 °C based on Stage II graphite bisulfate; obtained at temperatures of 600 °C and 800 °C based on Stage IV graphite bisulfate; and obtained at temperatures of 800 °C and 1000 °C based on Stage II graphite nitrate (see fig. 3a, b, c and d, respectively).

The following terms are used in the present application.

Thermally expanded graphite (TEG) means a low-density carbon material resulting from thermal expansion of graphite intercalation compounds or intercalated (oxidized) graphite whose porous structure is represented by macro- and mesopores.

Amorphous carbon means a carbon material characterized by the absence of long-range order in the structure represented in the form of disordered $sp^2$-bonded clusters of hexagonal aromatic rings. Amorphous carbon may also be characterized by deviations of C-C bond lengths and/or angles between carbon atoms from those found in graphite or diamond.

Graphite intercalation compounds (GIC) means compounds of graphite resulting from the insertion of various ions or molecules into the interplanar space of the graphite matrix making up a certain number of graphite layers alternating with layers of intercalated compound.

Intercalated graphite (IG), or oxidized graphite, means a non-stoichiometric adduct resulting from hydrolysis of graphite intercalation compounds with the preservation of the source graphite planar structure, comprising a certain amount of residual intercalated compound, water molecules in the intercrystallite space, and oxygen-containing functional groups on its surface.

Strong Bronsted acid means a proton ($H^+$) donor molecule characterized by a high stability of the conjugate base, i.e. acid anion, and also characterized by high values of the acidity constant and low values of the acidity constant indicator, i.e. its negative common logarithm $pK_a$ ($pK_a$ = -$lgK_a$, where $K_a$ is acidity constant).

Raman spectroscopy (combination scattering spectroscopy) means a research method based on irradiation of a sample under examination with monochromatic light, usually generated by a laser, with Raman scattering occurring on the sample characterized by a greater or lesser wavelength than the falling light, depending on the structure of the substance under examination. That scattered light can be detected in the direction perpendicular to the falling ray of light.

Gas permeability (gas leak rate) means the gas flow amount passing through the material under examination standardized in relation to the geometric parameter characterizing the area through which said flow passes, and the pressure drop making the gas to pass through the material. The geometric parameter characterizing the area through which the gas flow passes may be the average section area, or the average circumference of the circle if the material under examination is shaped as a ring.

Detailed description of invention

According to the present invention, the claimed foil is made of a composition comprising compressed TEG and amorphous carbon, wherein said composition is obtained from intercalated graphite without introducing an organic binder to be carbonized in order to produce amorphous carbon.

Amorphous carbon in the composition of GF is produced by thermal expansion in the preset ranges of temperatures and medium in the thermal expansion reactor, said ranges to be determined depending on the degree of oxidation of the GIC or IG graphite matrix.

Oxidation degree in the state of the art means a feature of the GIC or IG graphite matrix characterizing the positive charge value of the graphite matrix and/or the C/O ratio.

Amorphous carbon is comprised in the composition in quantities corresponding (pro rata) to maximum values of the $I_D/I_G$ ratio (depending on the oxidation degree), where $I_G$ and $I_D$ are scattered radiation intensity peaks in the frequency ranges of 1500 - 1630 $cm^{-1}$ and 1305-1395 $cm^{-1}$ for graphite and amorphous carbon, respectively, measured by Raman spectroscopy, depending on the oxidation degree of the above-mentioned intercalated graphite.

It is important that the maximum value of the $I_D/I_G$ ratio for each oxidation degree is greater than, or equal to, 0.01.

At lesser maximum values of the ratio, amorphous carbon either is not occurred at all, or is generated in such small quantities that it does not have any effect on the GF properties.

Amorphous carbon generated under such preset conditions plays the role of a binder in the foil composition.

A binder in the broad sense of the word means in the state of the art a substance ensuring cohesion of discrete elements and integrity of material as a whole (Chemical Encyclopedia, ed. by Knunyants I.L., 1995, v. 4).

Microstructural analysis (see fig. 1) has shown that the TEG structure in such foil is represented by packs in the form of parallelly organized graphite layers. Amorphous carbon (see AC in the pictures) looks like an area with a disordered structure, with no long-range order in carbon layer positioning. Areas with disordered structure of the amorphous carbon are located between areas with relatively highly ordered carbon structure as graphite packs (see Gr in the pictures): amorphous carbon is represented by a multitude of disordered carbon particles; it possesses a fairly high specific area. It enhances adhesive interaction at the interface between graphite packs and amorphous carbon, which results in a greater number of contacts between said packs and their better cohesion. The resulting structure is more monolithic than in foil made of TEG without amorphous carbon.

Such monolithic structure, ensured in turn by the presence of amorphous carbon in the GF structure playing the role of a binder, results in the reduction of gas leak rate ($\lambda$), i.e. increased GF tightness.

The foil according to the present invention can be obtained in a fairly broad range of densities from 0.5 to 2.1 $g/cm^3$.

The claimed foil can be additionally improved by adding a variety of functional additives. Foil can additionally comprise a reinforcing filler in the form of fibers or inorganic particles.

The current state of the art contains information on reinforcing GF with threads of natural, glass, ceramic, synthetic or carbon fibers, metal wire etc. for the purpose of increasing mechanical strength and chemical resistance of GF.

The content of reinforcing filler can vary depending on the additional objective set, and a person versed in the field will have no difficulty in determining what amount of filler should be taken in each specific case.

As a rule, the amount of filler does not exceed 50 mass %.

Thus, when using carbon fibers as a reinforcing filler to increase strength while retaining elasticity, the amount thereof should not exceed 40 mass %.

Foil can be obtained from a composition impregnated with a variety of functional liquids modifying the GF makeup. They may be solutions for increasing corrosion resistance, chemical resistance, fire resistance etc.

Prior art contains many technical solutions involving GF impregnation. For example, GF compositions are impregnated with phosphoric acid or boric acid solutions to improve fire resistance. Foil compositions are also impregnated with fluoropolymer solutions to improve antifriction properties.

Similar functional additives may be incorporated into the foil composition in dry form rather than in a solution.

The claimed foil can be used to produce laminate. According to the definition, a laminate is an item assembled, without the possibility of disintegration, with the help of heat, pressure, welding or glue. Laminate may also comprise, beside graphite layers of the claimed foil, metal foil, band or net.

The foil according to the present invention can be used to produce a sealing product, for instance, a flange gasket or stuffing box packing ring, which can be produced by die forging, pressing, cutting or winding.

The method of obtaining the above-described foil includes obtaining IG, heating the IG in the thermal shock mode for thermal expansion to obtain a semi-product comprising TEG and amorphous carbon, and subsequently compressing the semi-product to produce graphite foil, whereby heating in the thermal shock mode is conducted at temperatures ensuring maximum values of the $I_D/I_G$ ratio depending on the oxidation degree, where $I_G$ and $I_D$ are scattered radiation intensity peaks in the frequency ranges of 1500 - 1630 $cm^{-1}$ and 1305-1395 $cm^{-1}$ for graphite and amorphous carbon, respectively, measured by Raman spectroscopy, depending on the oxidation degree of the above-mentioned IG, with the maximum value of the $I_D/I_G$ ratio for each oxidation degree being greater than, or equal to, 0.01.

As already pointed out before, it was discovered that amorphous carbon is formed under certain temperature conditions of heat treatment for IG thermal expansion.

The authors of this application have examined the relationship between foil gas tightness characteristics and the temperature of heating conducted for IG thermal expansion. It turned out that at certain temperatures of heating for thermal expansion, depending on the graphite matrix oxidation degree, foil tightness characteristics sharply improved, while at other heating temperatures for the same stage they fell (see fig.2). The best graphite foil tightness, i.e. the minimum gas leak rate through the material, was observed for GF compressed from TEG obtained at 600 °C based on Stage I graphite bisulfate (fig. 2a); for GF compressed from TEG obtained at 800 °C based on Stage II (fig. 2b), Stage III (fig. 2c) and Stage IV graphite bisulfate (fig. 2d). Also, depending on the temperature of thermal expansion, the minimal leakage was demonstrated by GF samples produced from TEG obtained at 800 °C based on Stage II graphite nitrate (fig. 2e).

That phenomenon called for further research. It was determined by Raman microscopy that at the heating temperatures ensuring sealability improvement, amorphous carbon was also formed along with TEG. It was also determined that the content of amorphous carbon depended on the temperature of heating for IG thermal expansion, and was specific for each oxidation degree.

Oxidation degree in the state of the art means a feature of the GIC or IG graphite matrix characterizing the positive charge value of the graphite matrix.

In case of GIC chemical synthesis, oxidation degree grows with the reduction of the stage number, i.e. with the increase of the amount of oxidizer used for graphite matrix oxidation in the course of GIC synthesis, which affects the positive charge of the GIC graphite matrix. That positive charge of the GIC matrix is offset by negatively charged anions of the inserted acid, the number of which grows with the reduction of the stage number, i.e. with the increase of the GIC matrix oxidation degree. Hydrolysis results in the intercalated compound being washed out of the graphite matrix and in the formation of oxygen-containing functional groups on the surface of IG, which offset the positive charge of the matrix. The amount of oxygen-containing groups also grows with the increase of the graphite matrix oxidation degree.

In case of electrochemical GIC synthesis, oxidation degree grows with the increase of the amount of electricity used for electrochemical graphite matrix oxidation in the course of GIC synthesis, which affects the value of positive charge of the GIC graphite matrix and IG graphite matrix after hydrolysis and, respectively, the amount of oxygen-containing groups on the IG surface that offset the positive charge of the graphite matrix.

Thus, the number of GIC stage can be used as a measure of oxidation of both GIC and IG obtained by way of chemical synthesis; in case of electrochemical synthesis, the amount of electricity used for electrochemical oxidation of the graphite matrix can be used for the same purpose.

For research, foil was taken obtained from Stages I to IV graphite bisulfate produced by chemical synthesis.

It was discovered that, on Raman scattering spectra for a number of samples, beside scattered radiation peaks corresponding to graphite (G peak), there occurred high intensity peaks in some samples corresponding to disordered carbon structure represented by amorphous carbon (D peak).

Further research showed that an increase in intensity of the D peak (related to amorphous carbon and indicating its presence in the GF structure) compared with the G peak, which evidences to the increase of the share of amorphous carbon compared with the share of crystalline graphite in the TEG structure, is related to the conditions of TEG production, i.e. the number of the stage of the initial GIC and the TEG production temperature.

Raman scattering spectra were obtained for TEG produced under different temperatures based on the same stage, and for TEG produced at the same temperature based on different stages. Figures 3 a, b, c, and d show the Raman scattering spectra of TEG produced at 600 °C and 1000 °C based on Stage I graphite bisulfate, at 800 °C and 1000 °C based on Stage II graphite bisulfate, at 600 °C and 800 °C based on Stage IV graphite bisulfate, and at 800 °C and 1000 °C based on Stage II graphite nitrate.

Raman spectra are represented by graphs of relationships between Raman scattering intensities, on the one hand, and frequency or wave number, on the other hand. In Raman spectroscopy, a sample is subjected to monochromatic light radiation usually generated by a laser. Raman scattering is characterized with a greater or lesser wavelength than falling light. That scattered light can be detected in the direction perpendicular to the ray of falling light.

The G peak in the graphite Raman spectrum occurring at 1580 cm$^{-1}$ responds to planar dislocations of neighboring carbon atoms and is present in the spectrum of any graphite-like material.

In Raman spectra of materials with a disordered graphite structure there appears an additional D peak around 1350 cm$^{-1}$. High intensity of the D peak indicates the presence of a disorder caused by the formation in the graphite structure of disordered sp$^2$-bonded clusters of hexagonal aromatic rings, which may be represented by amorphous carbon.

As follows from the graph in fig. 3 c, a high-intensity G peak and a very low-intensity D peak are observed in the Raman spectrum of the Stage IV-based TEG sample for the heating temperature of 600 °C. For the heating temperature of 800 °C, a small but notable increase of the D peak intensity is observed compared with the G peak intensity in the Raman spectrum of the Stage IV-based TEG sample. In the Raman spectrum of the Stage I GIC-based TEG sample obtained at 600 °C, a significant increase in intensity of the D peak compared with the G peak is observed (fig. 3a). After increasing the heating temperature to 1000 °C, a notable decrease of intensity of the D peak is observed compared with the intensity of the G peak for the Raman spectrum of the Stage I-based TEG sample. Similar decreases in the D peak intensity compared with the G peak when increasing the heating temperature from 800 °C to 1000 °C are observed in the Raman spectra of Stage II graphite bisulfate and Stage II graphite nitrate-based TEG samples.

Both graphs taken together (fig.2 and fig. 3) provide evidence that the greater the D peak intensity (i.e. the greater the content of amorphous carbon in foil), the lesser is the leak rate.

It follows that we can determine an optimal temperature range for obtaining TEG and GF based thereon, characterized by the minimum gas leak rate at the maximum $I_D/I_G$ ratio corresponding to the maximum share of amorphous carbon in graphite foil.

The advantage of thermal expansion at a temperature selected from the preset range for each individual stage of a graphite intercalation compound consists in ensuring generation of the largest possible amount of amorphous carbon in the structure of thermally expanded graphite, said amorphous carbon playing the role of a binder in the graphite matrix and improving the operational properties of graphite foil.

All of the above has formed a foundation of the present invention.

The method hereunder of obtaining GF with improved tightness characteristics is performed as follows.

At first, IG is obtained. IG can be obtained, for example, by chemical synthesis of GIC of different stages by means of chemical interaction of the source graphite with strong Bronsted acids and subsequent hydrolysis thereof.

As a strong Bronsted acid, one can use sulfuric or nitric or any other acid acceptable for GIC production. Correspondingly, if sulfuric acid is used, GIC is obtained in the form of Stage I, II, III or IV graphite bisulfate by means of interaction of natural flake graphite with sulfuric acid in the presence of an oxidizer, and if nitric acid is used, GIC is obtained in the form of Stage II, III or IV graphite nitrate.

Oxidizers such as $HNO_3$, $KMnO_4$ or $H_2O_2$ may be used to obtain graphite bisulfate, stoichiometrically calculated to obtain a graphite intercalation compound with a structural formula $[C_{24n}^+]HSO_4^-(2H_2SO_4)$, where n is the obtained graphite bisulfate stage number.

After that, hydrolysis is conducted of the obtained GIC and graphite bisulfate of different stages to obtain IG corresponding to each stage. During hydrolysis, deintercalation takes place with the formation of non-stoichiometric adduct, namely intercalated graphite (oxidized graphite) containing a residual amount of water and intercalated material in the graphite matrix intercrystallite space and a significant amount of oxygen-containing groups on its surface.

After hydrolysis, the particles of intercalated graphite (oxidized graphite) are dried and additionally dehydrated.

At the next stage, heating for thermal expansion takes place, which is conducted in the mode of thermal shock at temperatures ensuring maximum $I_D/I_G$ ratio values depending on the oxidation degree.

To understand what kind of $I_D/I_G$ ratio values may be categorized as "maximum", reference foil samples were produced and examined by Raman spectroscopy.

For that purpose, we took IGs with different oxidation degree and heated them for thermal expansion at different temperatures in the thermal shock mode; collected spectral data; and established what $I_D/I_G$ ratio is maximum for the given stage, at what temperature of thermal expansion it had been obtained and if it conformed with the condition of $I_D/I_G \geq 0.01$.

Samples can be obtained in that fashion in the process of production: samples in accordance with the above are obtained from IG before heating for thermal expansion, whereby a portion of the IG is kept for the production of samples.

Reference samples of GF are produced from the portion of chemically obtained IG sampled earlier. For that purpose, at least three heatings for thermal expansion of intercalated graphite are performed for each individual stage at different thermal expansion temperatures, for example, in the range of from 300°C to 1400°C.

The number of heatings for thermal expansion may vary, but reducing the number of heatings below three will adversely affect the veracity of results and will not permit to accurately determine the range of calcination temperatures for thermal expansion of graphite needed to obtain the least possible leak rate.

It is desirable (although not strictly required) to conduct heating for thermal expansion with a step of 100 °C to 200 °C. A step in this application means the conducting of each subsequent heating at a temperature 100 °C or 200 °C higher (or lower) than the previous one, for example, in the following sequence: 600 °C, 800 °C, 1000 °C; or: 1100 °C, 1000 °C, 900 °C, 800 °C, 700 °C, 600 °C, 500 °C; or any other. It should be noted that the shorter the step between heatings for thermal expansion, the more accurately one can determine the required temperature; while increasing the step to more than 200 °C will result in significant inaccuracy in defining the temperature.

TEG obtained by heating in the thermal shock mode is subjected to compression by pressing or rolling to produce reference samples of fixed density GF.

The obtained samples are examined by Raman spectroscopy (combination scattering spectroscopy) in the Raman shift range of 1100 - 1800 cm$^{-1}$. The ratio of intensities of D peak and G peak in said range of the Raman spectrum is determined ($I_D/I_G$), the increase of which corresponds to the increase of the share of amorphous carbon in the GF sample. Then the chart is plotted of the dependency of that peak correlation from the temperature of thermally expanded graphite production.

The narrow heating temperature range T±50 °C is determined for each individual stage, where T is the temperature of heating for graphite thermal expansion, under which a maximum $I_D/I_G$ ratio is observed.

Then foil as such is obtained from the main portion of IG. For that purpose, IG is heat treated at the temperature of T±50 °C, under which a maximum share of amorphous carbon in graphite foil is observed (maximum $I_D/I_G$ ratio value), to obtain thermally expanded graphite.

Then thermally expanded graphite obtained in accordance with above clause is subjected to compression to obtain graphite foil with a density of 0.5 - 1.5 g/cm$^3$.

The GF obtained according to the above based on thermally expanded graphite is guaranteed to possess a minimal gas leak rate with maximum amorphous carbon content.

Examples of embodiment of the invention.

Example 1.

GF based on Stage I and Stage II graphite bisulfate was being obtained. Stage I and Stage II graphite bisulfate was obtained by interaction of natural flake graphite with sulfuric acid in the presence of potassium dichromate in a mass proportion of m(graphite): m($K_2Cr_2O_7$) : m($H_2SO_4$) = 1 : 0.17 : 7.4; 1 : 0.09 : 7.4.

To obtain Stage I graphite bisulfate, 200 g of graphite was mixed with 34 g of $K_2Cr_2O_7$; to obtain Stage II graphite bisulfate - with 18 g of $K_2Cr_2O_7$. Thereafter, 1480 g of 98% sulfuric acid was added to each mixture. The obtained mixture was stirred for 1.5 hours.

The obtained Stage I and Stage II graphite bisulfate was washed with water in a proportion of m(H2SO4):m(H2O) $\approx$ 1:7, i.e. each sample was washed with $\approx$ 10 l of water to produce intercalated graphite, and dried till loose (free-flowing) state.

Temperatures of intercalated graphite thermal expansion were selected out of the temperature range of 300°C - 1400°C depending on the graphite matrix oxidation degree, whereat a maximum D peak and G peak intensity ratio ($I_D/I_G$) could be achieved for graphite foil.

The obtained intercalated graphite based on Stage I graphite bisulfate was being expanded at the selected temperature of 600 °C as well as at 1000 °C. The obtained intercalated graphite based on Stage II graphite bisulfate was being expanded at the selected temperature of 800 °C as well as at 1000 °C.

The obtained thermally expanded graphite was compressed into graphite foil with a density of 1 g/cm$^3$ and thickness of 1.5 mm.

The obtained graphite foil was examined by Raman spectroscopy (combination scattering spectroscopy) and Raman spectra produced in the range of 1100 - 1800 cm$^{-1}$ , wherein G and D peaks characteristic for graphite materials were observed with a maximum at 1580 and 1350 cm$^{-1}$ (see fig. 3 a, b).

The maximum D peak and G peak intensity ratio ($I_D/I_G$ = 0.35) was observed for GF compressed from TEG obtained at the selected temperature of 600 °C based on Stage I graphite bisulfate.

For GF compressed from TEG obtained at 1000 °C based on Stage I graphite bisulfate, D peak and G peak intensity ratio ($I_D/I_G$) equal to 0.05 was observed.

The selected temperature of 600 °C for TEG production from Stage I graphite bisulfate ensures a maximum $I_D/I_G$ ratio equal to 0.35 for graphite foil compared with other temperatures.

The maximum D peak and G peak intensity ratio ($I_D/I_G$ = 0.20) was observed for GF compressed from TEG obtained at the selected temperature of 800 °C based on Stage II graphite bisulfate.

For GF compressed from TEG obtained at 1000 °C based on Stage II graphite bisulfate, D peak and G peak intensity ratio ($I_D/I_G$) equal to 0.04 was observed.

The selected temperature of 800 °C for TEG production from Stage II graphite bisulfate ensures a maximum $I_D/I_G$ ratio equal to 0.20 for graphite foil compared with other temperatures.

Depending on the intercalated graphite oxidation degree, the TEG production temperature ensuring a maximum $I_D/I_G$ of graphite foil changes: from 600 °C for intercalated graphite with a greater oxidation degree (based on Stage I graphite bisulfate), to 800 °C for a lesser intercalated graphite oxidation degree (based on Stage II graphite bisulfate).

Leak rates were determined by examining gas permeability in the direction perpendicular to the axis of compression, using the TEMES fl.ai1 test rig for measuring tightness of sealing materials.

For that purpose, nitrogen leak rate through a ring-shaped GF gasket was measured. The source sample had the shape of a ring sealing with the inner and outer diameters of 49 x 92 mm, 1.5 mm thick, with the initial density of 1 g/cm$^3$. The pressure differential was 39.5 atm (40 bar). The testing terms assumed that the graphite ring would be tightly held between two surfaces, with the gas transport only taking place through the graphite foil material. Gas leak rate was measured for samples with identical fixed density; additional pressure was applied to obtain a GF fixed density of 1.7 g/cm$^3$, following which, nitrogen leak rate through the GF was measured under pressure differential of 39.5 atm (40 bar).

The gas under examination, penetrating through the graphite foil, entered a calibrated container $V_{con}$. An increase of pressure ($p_{t2}$-$p_{t1}$) in the container was measured, said increase being in proportion to the incoming amount of gas. After that, the gas flow (mg/s) through the graphite foil was calculated as the amount of gas passing in a unit of time ($t_1$-$t_2$):

$$J = \frac{(p_{t2} - p_{t1}) \cdot V_{con} \cdot T_0}{(t_1 - t_2) \cdot p_0 \cdot T}$$

Following that, the leak rate was calculated as a ratio of the gas flow J (mg/s) to the average circumference l (0.22 m):

$$\lambda = \frac{J}{l}$$

Graphite foil compressed from TEG obtained under the selected temperature of 600°C based on Stage I graphite bisulfate, was characterized by the minimal leak rate of 0.003 mg/m/s compared with the other TEG production temperatures (see fig. 2a).

Graphite foil compressed from TEG obtained under the temperature of 1000 °C based on Stage I graphite bisulfate, was characterized by a leak rate of 0.089 mg/m/s.

Graphite foil compressed from TEG obtained under the selected temperature of 800°C based on Stage II graphite bisulfate, was characterized by the minimal leak rate of 0.074 mg/m/s compared with the other TEG production temperatures (see fig. 2b).

Graphite foil compressed from TEG obtained under the selected temperature of 1000°C based on Stage II graphite bisulfate, was characterized by a leak rate of 0.234 mg/m/s.

Example 2.

GF based on Stage IV graphite bisulfate was being obtained. Stage IV graphite bisulfate was obtained by interaction of natural flake graphite with sulfuric acid in the presence of potassium dichromate in a mass proportion of $m(graphite): m(K_2Cr_2O_7) : m(H_2SO_4) = 1 : 0.04 : 7.4$.

To obtain Stage IV graphite bisulfate, 200 g of graphite was mixed with 8 g of $K_2Cr_2O_7$. Thereafter, 1480 g of 98% sulfuric acid was added to the mixture. The obtained mixture was stirred until graphite bisulfate of the required stage was obtained.

The obtained graphite bisulfate was washed with water in a proportion of $m(H2SO4):m(H2O) \approx 1:7$, i.e. the sample was washed with $\approx 10$ 1 of water to produce intercalated graphite, and dried till loose (free-flowing) state.

The temperature of intercalated graphite thermal expansion was selected out of the temperature range of 300°C - 1400°C, whereat a maximum D peak and G peak intensity ratio ($I_D/I_G$) could be achieved for graphite foil.

The obtained intercalated graphite based on Stage IV graphite bisulfate was being expanded at the selected temperature of 800 °C as well as at 600 °C.

The obtained thermally expanded graphite was compressed into graphite foil with a density of 1 $g/cm^3$ and thickness of 1.5 mm.

The obtained graphite foil was examined by Raman spectroscopy (combination scattering spectroscopy) and Raman spectra produced in the range of 1100 - 1800 $cm^{-1}$, wherein G and D peaks characteristic for graphite materials were observed, with a maximum at 1580 and 1350 $cm^{-1}$ (see fig. 3 c).

The maximum D peak and G peak intensity ratio ($I_D/I_G$ = 0.05) was observed for GF compressed from TEG obtained at the selected temperature of 800 °C based on Stage IV graphite bisulfate.

For GF compressed from TEG obtained at 600 °C based on Stage IV graphite bisulfate, D peak and G peak intensity ratio ($I_D/I_G$) equal to 0.02 was observed.

The selected temperature of 800 °C for TEG production from Stage IV graphite bisulfate ensures the maximum $I_D/I_G$ ratio equal to 0.05 for graphite foil compared with the other temperatures.

Leak rate of said graphite foil was examined, whereby the GF had the shape of a ring sealing with the inner and outer diameters of 49 x 92 mm, 1.5 mm thick, with the initial density of 1 $g/cm^3$ in conformity with DIN 3535-6 standard; the testing was conducted on the TEMES fl.ail test rig for measuring tightness of sealing materials. The pressure differential was 39.5 atm (40 bar). Additional pressure was applied to obtain a GF fixed density of 1.7 $g/cm^3$.

Graphite foil compressed from TEG obtained under the selected temperature of 800°C based on Stage IV graphite bisulfate, was characterized by the minimal leak rate of 0.220 mg/m/s compared with the other TEG production temperatures (see fig. 2d).

Graphite foil forged of TEG obtained under the temperature of 600 °C based on Stage IV graphite bisulfate, was characterized by a leak rate of 1.010 mg/m/s.

Example 3.

GF based on Stage II graphite nitrate was being obtained. Stage II graphite nitrate was obtained by interaction of natural flake graphite with fuming nitric acid in a mass proportion of $m(graphite) : m(HNO3) = 1 : 0.8$ To obtain Stage II graphite nitrate, 200 g of graphite was mixed with 160 g of fuming nitric acid. The mixture was stirred until Stage II graphite nitrate was obtained.

The obtained graphite nitrate was washed with water in a proportion of $m(HNO3):m(H2O) \approx 1:3$, i.e. the sample was washed with $\approx 0.5$ 1 of water to produce intercalated graphite, and dried till loose (free-flowing) state.

The temperature of intercalated graphite thermal expansion was selected out of the temperature range of 300 °C - 1400 °C, whereat a maximum D peak and G peak intensity ratio ($I_D/I_G$) could be achieved for graphite foil.

The obtained intercalated graphite based on Stage II graphite nitrate was being expanded at the selected temperature of 800 °C as well as at 1000 °C.

The obtained thermally expanded graphite was compressed into graphite foil with a density of 1 $g/cm^3$ and thickness of 1.5 mm.

The obtained graphite foil was examined by Raman spectroscopy (combination scattering spectroscopy) and Raman spectra produced in the range of 1100 - 1800 cm$^{-1}$, wherein G and D peaks characteristic for graphite materials were observed, with a maximum at 1580 and 1350 cm$^{-1}$ (see fig. 3 d).

The maximum D peak and G peak intensity ratio ($I_D/I_G$ = 0.06) was observed for GF compressed from TEG obtained at the selected temperature of 800 °C based on Stage II graphite nitrate.

For GF compressed from TEG obtained at 1000 °C based on Stage II graphite nitrate, D peak and G peak intensity ratio ($I_D/I_G$) equal to 0 was observed.

The selected temperature of 800 °C for TEG production from Stage II graphite nitrate ensures the maximum $I_D/I_G$ ratio equal to 0.06 for graphite foil compared with the other temperatures.

Leak rate of that graphite foil was examined, whereby the GF had the shape of a ring sealing with the inner and outer diameters of 49 x 92 mm, 1.5 mm thick, with the initial density of 1 g/cm$^3$ in conformity with DIN 3535-6 standard; the testing was conducted on the TEMES fl.ai1 test rig for measuring leakage of sealing materials. The pressure differential was 39.5 atm (40 bar). Additional pressure was applied to obtain a GF fixed density of 1.7 g/cm$^3$.

Graphite foil compressed from TEG obtained under the selected temperature of 800°C based on Stage II graphite nitrate, was characterized by the minimal leak rate of 0.080 mg/m/s compared with the other TEG production temperatures (see fig. 2e).

Graphite foil compressed from TEG obtained under the temperature of 1000 °C based on Stage II graphite nitrate, was characterized by a leak rate of 0.209 mg/m/s.

All processing modes and foil properties realized under such modes are summarized in Table 1.

As follows from the table, the best leak rate is demonstrated by the foil obtained in accordance with the claimed invention (see $N_oN_o$ 2, 3, 5, 9), i.e. under heating for thermal expansion at temperatures corresponding to the maximum $I_D/I_G$ values depending on oxidation degree.

The other experimental examples ($N_oN_o$ 1, 4, 6, 7, 8 and 10) confirm that with other $I_D/I_G$ ratios, the claimed technical result is not achieved.

Table 1.

| Ser. № | Method of obtaining IG | TEG production temperature, °C | $I_D/I_G$ | $\lambda$, mg/m/sec |
|---|---|---|---|---|
| 1. | Stage II graphite nitrate + hydrolysis | 900 | 0.00 | 0.150 |
| 2. | Electrochemical IG production (Q = 1500 $\underline{\text{Кл/г}}$ ) | 900 | 0.49 | 0.002 |
| 3. | Stage I graphite bisulfate + hydrolysis | 600 | 0.35 | 0.003 |
| 4. | Stage I graphite bisulfate + hydrolysis | 1000 | 0.05 | 0.089 |
| 5. | Stage II graphite bisulfate + hydrolysis | 800 | 0.20 | 0.074 |
| 6. | Stage II graphite bisulfate + hydrolysis | 1000 | 0.04 | 0.234 |
| 7. | Stage IV graphite bisulfate + hydrolysis | 800 | 0.05 | 0.220 |
| 8. | Stage IV graphite bisulfate + hydrolysis | 600 | 0.02 | 1.010 |
| 9. | Stage II graphite nitrate + hydrolysis | 800 | 0.06 | 0.080 |
| 10. | Stage II graphite nitrate + hydrolysis | 1000 | 0.00 | 0.209 |

**Claims**

1. Graphite foil with improved tightness and low leakage characteristics **characterized in that** it is made of a composition comprising compressed thermally expanded graphite and amorphous carbon, wherein said composition is obtained from intercalated graphite with different graphite matrix oxidation degree and said composition comprises amorphous carbon in quantities corresponding to maximum $I_D/I_G$ ratio values depending on oxidation degree, where $I_G$ and $I_D$ are scattered radiation intensity peaks in the frequency range of 1500 - 1630 cm$^{-1}$ and 1305 - 1395 cm$^{-1}$ for graphite and amorphous carbona, respectively, measured by Raman spectroscopy, depending on the oxidation degree of the above-mentioned intercalated graphite, and whereby the maximum $I_D/I_G$ ratio value for each oxidation degree is greater than, or equal to, 0.05.

2. Foil according to claim 1, **characterized in that** it has a density of 0.5 to 2.1 g/cm$^3$.

3. Foil according to claim 1, **characterized in that** it is made of a composition additionally comprising a reinforcing filler in the form of fibers or inorganic particles.

**4.** Foil according to claim 3, **characterized in that** the composition additionally comprises carbon fibers in amounts not exceeding 40 mass % of the composition mass.

**5.** Foil according to claim 1, **characterized in that** it is made of a composition additionally impregnated with a functional liquid.

**6.** Foil according to claim 1, **characterized in that** it is made of a composition additionally comprising anti-corrosion, anti-oxidation or anti-adhesion additives.

**7.** Graphite sheet material with improved tightness characteristics, **characterized in that** it is made of the graphite foil in accordance with claims 1 to 6 and is a laminate made of said graphite foil and metal foil, band or net.

**8.** A sealing with improved tightness characteristics selected from the group consisting of a flange gaskets and stuffing box packing rings, **characterized in that** it is made of the graphite foil in accordance with claims 1 to 6.

**9.** A method of obtaining graphite foil with improved tightness characteristics, **characterized in that** it includes obtaining intercalated graphite, heating said intercalated graphite in the thermal shock mode for thermal expansion to produce a semi-product comprising thermally expanded graphite and amorphous carbon, and the subsequent compression of said semi-product into graphite foil, wherein the heat treatment in the thermal shock mode is performed at temperatures ensuring maximum $I_D/I_G$ ratio values depending on the graphite matrix oxidation degree, where $I_G$ and $I_D$ are scattered radiation intensity peaks in the frequency range of 1500 - 1630 $cm^{-1}$ and 1305 - 1395 $cm^{-1}$ for graphite and amorphous carbon, respectively, measured by Raman spectroscopy, and whereby the maximum $I_D/I_G$ ratio value for each oxidation degree is greater than, or equal to, 0.05.

**10.** The method according to claim 9, **characterized in that** intercalated graphite is obtained in the following sequence: first, graphite intercalation compounds with different oxidation degrees are obtained by chemical interaction of the source graphite with strong Bronsted acids, and then said graphite intercalation compounds are subjected to hydrolysis to obtain intercalated graphite.

**11.** The method according to claim 9, **characterized in that** graphite intercalation compounds are Stage I, II and III graphite bisulfates and/or mixtures thereof.

**12.** The method according to claim 9, **characterized in that** graphite intercalation compounds are Stage II or III graphite nitrate and/or mixtures thereof.

**13.** The method according to claim 9, **characterized in that** the graphite matrix oxidation degree is ascertained by the number of the stage of the obtained graphite intercalation compound.

**14.** The method according to claim 10, **characterized in that**, prior to heat treatment, part of the intercalated graphite obtained from graphite intercalation compounds of different stages is used to produce foil reference samples by conducting experimental heating for thermal expansion of the intercalated graphite under at least three different temperatures and subsequent compression, whereafter said foil reference samples are examined by Raman spectroscopy to obtain $I_D/I_G$ ratio dependencies from thermal expansion on temperature, taking into account of graphite intercalation compound stage numbers, where $I_G$ and $I_D$ are scattered radiation intensity peaks in the frequency ranges of 1500 - 1630 $cm^{-1}$ and 1305 - 1395 $cm^{-1}$ for graphite and amorphous carbon, respectively.

**15.** The method according to claim 9, **characterized in that** compression is performed by rolling or pressing the thermally expanded graphite.

Fig.1

Fig.2

(a)
Stage I
graphite bisulfate

(b)
Stage II
graphite bisulfate

(c)
Stage IV
graphite bisulfate

(d)
Stage II
graphite nitrate

Fig. 3

# INTERNATIONAL SEARCH REPORT

| International application No. |
|---|
| PCT/RU 2019/000465 |

## A. CLASSIFICATION OF SUBJECT MATTER
C01B 32/225 (2017.01); C04B 35/536 (2006.01); F16J 15/3292 (2016.01)

According to International Patent Classification (IPC) or to both national classification and IPC

## B. FIELDS SEARCHED

Minimum documentation searched (classification system followed by classification symbols)
C01B 32/00, 32/20 - 32/23, C04B 35/00, 35/53 - 35/536, 35/56, F16J 15/00, 15/20, 15/30, 15/32 - 15/3292, B32B 5/00

Documentation searched other than minimum documentation to the extent that such documents are included in the fields searched

Electronic data base consulted during the international search (name of data base and, where practicable, search terms used)
EAPATIS, ESPACENET, Google, PatSearch (RUPTO internal), RUPAT, USPTO, J-PlatPat, DWPI, PATENTSCOPE

## C. DOCUMENTS CONSIDERED TO BE RELEVANT

| Category* | Citation of document, with indication, where appropriate, of the relevant passages | Relevant to claim No. |
|---|---|---|
| A | RU 2472701 C1 (ZAKRYTOE AKTSIONERNOE OBSCHESTVO "GRAFITINVEST") 20.01.2013, the abstract; p. 1, lines 1-5; p. 4, lines 30-43; p. 5, lines 8, 9, 11-43; p. 6, lines 23-35, p. 7, lines 19-21; table 1; points1, 6 of the claims | 1-6, 9-15 |
| A | RU 95592 U1 (INSTITUT NOVYKH UGLERODNYKH MATERIALOV I TEKHNOLOGY (ZAKRYTOE AKTSIONERNOE OBSCHESTVO) 10.07.2010, p. 1, lines 1-10; p. 2, lines 13-23; p. 4, lines 4-10; p. 5, lines 3-19; points 1, 2 of the claims | 1-15 |
| A | US 4826181 A (UNION CARBIDE CORPORATION) 02.05.1989, the abstract; table 2, lines 66, 67; table 3, lines 1-68; table 4, lines 1-13 | 1-6, 9-15 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 October 2019 (03.10.2019) | 07 November 2019 (07.11.2019) |

| Name and mailing address of the ISA/ RU | Authorized officer |
|---|---|
| Facsimile No. | Telephone No. |

Form PCT/ISA/210 (second sheet) (April 2005)

**EP 3 816 104 A1**

## REFERENCES CITED IN THE DESCRIPTION

### Patent documents cited in the description

- US 4826181 A
- US 5225379 A
- US 5228701 A
- EP 0334589 A2

### Non-patent literature cited in the description

- Chemical Encyclopedia. 1995, vol. 4